(19) **Europäisches Patentamt / European Patent Office / Office européen des brevets**

(11) **EP 4 773 212 A1**

(12) **EUROPEAN PATENT APPLICATION**
published in accordance with Art. 153(4) EPC

(43) Date of publication:
**08.07.2026 Bulletin 2026/28**

(21) Application number: **24913327.3**

(22) Date of filing: **25.10.2024**

(51) International Patent Classification (IPC):
*H01M 4/134* (2010.01)     *H01M 4/131* (2010.01)
*H01M 4/133* (2010.01)     *H01M 4/36* (2006.01)
*H01M 4/48* (2010.01)      *H01M 4/583* (2010.01)
*H01M 4/62* (2006.01)      *H01M 4/02* (2006.01)

(52) Cooperative Patent Classification (CPC):
**H01M 4/02; H01M 4/131; H01M 4/133;
H01M 4/134; H01M 4/36; H01M 4/48; H01M 4/583;
H01M 4/62**

(86) International application number:
**PCT/KR2024/016368**

(87) International publication number:
**WO 2025/143490 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.12.2023  KR 20230193253**

(71) Applicant: **SK On Co., Ltd.**
**Seoul 03161 (KR)**

(72) Inventors:
• **KIM, Hyo-Mi**
  **Daejeon 34124 (KR)**
• **KWON, Seong-Cho**
  **Daejeon 34124 (KR)**
• **KIM, Moon-Sung**
  **Daejeon 34124 (KR)**

• **RYU, Sang-Baek**
  **Daejeon 34124 (KR)**
• **PARK, Da-Hye**
  **Daejeon 34124 (KR)**
• **PARK, Sang-Won**
  **Daejeon 34124 (KR)**
• **BANG, Sang-In**
  **Daejeon 34124 (KR)**
• **YOOK, Seung-Hyun**
  **Daejeon 34124 (KR)**
• **JANG, Hwan-Ho**
  **Daejeon 34124 (KR)**
• **CHUNG, Da-Bin**
  **Daejeon 34124 (KR)**
• **HAN, Jun-Hee**
  **Daejeon 34124 (KR)**

(74) Representative: **Stolmár & Partner**
**Patentanwälte PartG mbB**
**Blumenstraße 17**
**80331 München (DE)**

(54) **ANODE FOR LITHIUM SECONDARY BATTERY AND LITHIUM SECONDARY BATTERY INCLUDING SAME**

(57)     An anode for a lithium secondary battery according to an embodiment of the present disclosure is provided an anode current collector; a first anode mixture layer formed on at least one surface of the anode current collector and comprising a first carbon-based active material comprising artificial graphite and natural graphite; and a second anode mixture layer formed on the first anode mixture layer and comprising a second carbon-based active material comprising artificial graphite, wherein the first anode mixture layer and the second anode mixture layer respectively comprise a silicon-based active material, and wherein the first anode mixture layer has an OI value according to Formula 1 that is greater than the OI value of the second anode mixture layer.

$$[Formula\ 1]$$
$$OI = I_{004}\ /\ I_{110}$$

(In Formula 1, OI is a crystal orientation index according to an XRD measurement, $I_{004}$ is the peak intensity of the (004) plane when the XRD measurement is performed for an anode mixture layer, and $I_{110}$ is the peak intensity of

**(Cont. next page)**

EP 4 773 212 A1

the (110) plane when the XRD measurement is performed for the mixture layer.)

[FIG. 1]

## Description

### Technical Field

The present disclosure relates to an anode for a lithium secondary battery and a lithium secondary battery including the same.

### Background Art

In general, a large amount of research has been conducted into electric vehicles (EVs) that can replace fossil-fuel-powered vehicles, such as gasoline and diesel vehicles, which are major contributors to air pollution, and lithium secondary batteries with high discharge voltage and stable output are mainly used as power sources for these electric vehicles (EVs). Accordingly, the need for lithium secondary batteries with high-energy-density is increasing, and development and research of high-capacity anodes for this purpose are also being actively conducted.

### Disclosure of Invention

### Technical Problem

An aspect of the present disclosure is to provide an anode for a high-energy-density lithium secondary battery.
Another aspect of the present disclosure is to provide an anode for a lithium secondary battery having low resistance.
Another aspect of the present disclosure is to provide an anode for a lithium secondary battery with excellent fast-charging characteristics.

### Solution to Problem

According to an embodiment of the present disclosure, an anode for a lithium secondary battery includes: an anode current collector; a first anode mixture layer formed on at least one surface of the anode current collector and comprising a first carbon-based active material comprising artificial graphite and natural graphite; and a second anode mixture layer formed on the first anode mixture layer and comprising a second carbon-based active material comprising artificial graphite, wherein the first anode mixture layer and the second anode mixture layer respectively comprise a silicon-based active material, and wherein the first anode mixture layer has an OI value according to Formula 1 that is greater than that of the second anode mixture layer.

$$[\text{Formula 1}]$$
$$OI = I_{004} / I_{110}$$

(In Formula 1, OI is a crystal orientation index according to an XRD measurement, $I_{004}$ is the peak intensity of the (004) plane when the XRD measurement is performed for an anode mixture layer, and $I_{110}$ is the peak intensity of the (110) plane when the XRD measurement is performed for the mixture layer.)
In some embodiments, the first anode mixture layer may have an OI value of 9 to 18.
In some embodiments, the second anode mixture layer may have an OI value of 1 to 8.
In some embodiments, the first carbon-based active material may comprise, according to the following Formula 2, a Raman R value greater than that of the second carbon-based active material.

$$[\text{Formula 2}]$$
$$\text{Raman } R = I_D / I_G$$

(In Formula 2, $I_D$ is a peak intensity value in the 1350 to 1380 $\text{cm}^{-1}$ absorption region, and $I_G$ is the peak intensity value in the 1580 to 1600 $\text{cm}^{-1}$ absorption region.)
In some embodiments, the first carbon-based active material may have a Raman R value of 0.11 to 0.50.
In some embodiments, the second carbon-based active material may have a Raman R value of 0.01 to 0.10.
In some embodiments, the content of artificial graphite in the first anode mixture layer is 50 to 90 wt%, and the content of natural graphite in the first anode mixture layer is 10 to 50 wt%.
In some embodiments, the first carbon-based active material may have a bimodal morphology, and the second carbon-based active material may have a single-particle morphology.

In some embodiments, the first carbon-based active material may not be surface-coated.

In some embodiments, the second carbon-based active material may be surface-coated with at least one selected from the group consisting of hard carbon, soft carbon, heavy oil, and pitch.

In some embodiments, the first anode mixture layer may further comprise a first conductive material; the second anode mixture layer may further comprise a second conductive material; and the first conductive material and the second conductive material may be different from each other.

In some embodiments, the first conductive material has a Raman R value greater than that of the second conductive material according to the following Formula 2.

$$[\text{Formula 2}]$$
$$\text{Raman R} = I_D / I_G$$

(In Formula 2, $I_D$ is a peak intensity value in the 1350 to 1380 cm$^{-1}$ absorption region, and $I_G$ is a peak intensity value in the 1580 to 1600 cm$^{-1}$ absorption region.)

In some embodiments, wherein the first conductive material has a Raman R value of 0.1 to 1.8.

In some embodiments, the second conductive material has a Raman R value of 0.01 to 0.09.

A lithium secondary battery according to an embodiment of this disclosure comprises an anode for a lithium secondary battery according to any one of the embodiments described above.

## Advantageous Effects of Invention

According to an aspect of the present disclosure, an anode for a lithium secondary battery having high-energy-density can be provided.

According to another aspect of the present disclosure, an anode for a lithium secondary battery having excellent fast-charging characteristics may be provided.

According to another aspect of the present disclosure, the resistance of an anode for a lithium secondary battery can be reduced.

Brief Description of Drawings

FIG. 1 is a conceptual diagram of a carbon-based active material having a parallel-stacked structure, showing a basal plane and an edge plane formed by the convergence of the edges of the basal planes.

FIG. 2 is a schematic cross-sectional view illustrating the structure of an anode for a lithium secondary battery according to an embodiment.

## Best mode for the Invention

Hereinafter, unless otherwise defined herein, when a portion such as a layer, a film, a thin film, a region, or a plate is described as being "on" or "above" another portion, this includes not only cases where it is "directly on" the other portion but also cases where another portion is interposed between them.

In the present disclosure, the 'orientation' of an active material refers to a characteristic represented by a Crystal Orientation Index (OI) value, which is determined by a peak intensity ratio between the peak intensity of the (004) plane ($I_{004}$) and the peak intensity of the (110) plane ($I_{110}$) according to XRD measurements. For example, a relatively small OI value indicates a low-orientation active material, whereas a relatively large OI value indicates a high-orientation active material.

To realize a high-capacity, high-energy-density secondary battery, in an embodiment, a silicon-based active material having a higher discharge capacity (1500 mAh/g) than graphite (350 mAh/g) can be applied to the anode of a lithium secondary battery. When such a high-discharge-capacity silicon-based active material is applied together with a carbon-based active material such as graphite, the loading weight (LW) of the anode active material layer can be reduced, thereby further increasing the energy density.

However, silicon-based active materials have a slower lithium-ion diffusion rate and exhibit a larger volume expansion compared to carbon-based active materials, which makes it difficult to secure excellent fast-charging and life characteristics for anodes including silicon-based active materials. According to an embodiment, inclusion of a carbon-based active material having a low orientation index (OI) value together with the silicon-based active material can improve fast-charging characteristics. However, the low-orientation carbon-based active material is difficult to roll to a high density, and even when used, it may be difficult to achieve a high-energy-density anode.

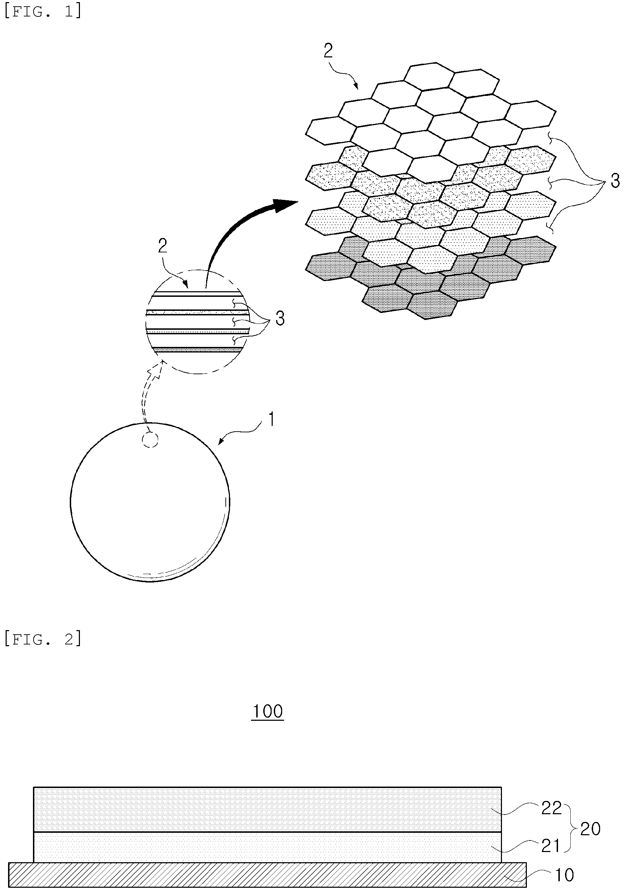

In this regard, according to an embodiment, the above problems can be substantially resolved. Referring to FIGS. 1 and 2, embodiments of this disclosure will be described in detail below.

FIG. 1 is a conceptual diagram of a carbon-based active material having a parallel-stacked structure, showing a basal plane and an edge plane formed by the convergence of the edges of the basal planes.

FIG. 2 is a schematic cross-sectional view illustrating the structure of an anode for a lithium secondary battery according to an embodiment.

Anode for lithium secondary batteries

An anode 100 for a lithium secondary battery according to an embodiment of the present disclosure may include an anode current collector 10, a first anode mixture layer 21 formed on at least one surface of the anode current collector 10, and a second anode mixture layer 22 formed on the first anode mixture layer 21.

The first anode mixture layer 21 comprises a first carbon-based active material, and the second anode mixture layer 22 comprises a second carbon-based active material, wherein the first and second anode mixture layers may respectively comprise a silicon-based active material.

The first carbon-based active material may have an OI value according to Formula 1 below that is greater than that of the second carbon-based active material.

$$[\text{Formula 1}]$$
$$OI = I_{004} / I_{110}$$

In Formula 1, OI is the orientation index determined from XRD measurements, $I_{004}$ is the peak intensity of the (004) plane when the XRD measurement is performed for the carbon-based active material, and $I_{110}$ is the peak intensity of the (110) plane when the XRD measurement is performed for the carbon-based active material.

An anode 100 for a lithium secondary battery has a multilayer structure and includes an anode mixture layer 20 on an anode current collector 10, wherein the anode mixture layer 20 may include a first anode mixture layer 21 and a second anode mixture layer 22. The first anode mixture layer 21 is an active material layer (lower layer) on a surface adjacent to the anode current collector 10, and the second anode mixture layer 22 is an active material layer (upper layer) formed on the first anode mixture layer 21, relatively spaced from the anode current collector 10 and adjacent to the electrolyte.

An anode 100 for a lithium secondary battery according to an embodiment of this disclosure may include a first anode mixture layer 21 and a second anode mixture layer 22, which may respectively include a first carbon-based active material and a second carbon-based active material having different orientations. Specifically, first anode mixture layer 21, which is the lower layer, may include the first carbon-based active material that is highly oriented, having a relatively large crystalline orientation index (OI), and second anode mixture layer 22, which is the upper layer, may include the second carbon-based active material that has low orientation, having a relatively small crystal orientation index (OI). Hereinafter, the crystal orientation index (OI) of the carbon-based active material will be described in more detail.

The crystal orientation index (OI) is a value defined as the ratio of the peak intensity $I_{004}$ in the (004) plane to the peak intensity $I_{110}$ in the (110) plane observed when the XRD measurement is performed for the active material. Specifically, $I_{004}$ may be the peak intensity of the (004) plane appearing at an angle of $2\theta = 54.7 \pm 0.2°$ when the XRD measurement is performed for the active material using Cu $K\alpha$ radiation, and $I_{110}$ may be the peak intensity of the (110) plane appearing at an angle of $2\theta = 77.5 \pm 0.2°$ when the XRD measurement is performed for the active material using Cu $K\alpha$ radiation. Generally, the peak intensity value refers to the peak height or the integrated peak area, and $I_{004}$ and $I_{110}$ may be calculated from the integrated peak area.

On the other hand, referring to FIG. 1, a carbon-based active material 1, such as artificial graphite, generally includes carbon layers in which hexagonal rings of six carbon atoms are arranged in a planar manner, the carbon layers being stacked parallel to one another. In such a carbon-based active material 1, basal plane 2 corresponds to the basal plane of the carbon layers having a parallel stacked structure, and edge plane 3 refers to the plane formed by the edges of each basal plane.

Intercalation and deintercalation of lithium ions into and out of carbon-based active material 1 during the charging and discharging process of a secondary battery occur mainly through edge planes 3. Accordingly, as the number of such edge planes 3 increases, intercalation and deintercalation of lithium ions during charging become easier, and fast-charging characteristics may be further improved.

In this regard, the crystal orientation index (OI) value determined from XRD measurements for carbon-based active material 1 refers to the peak intensity of the (110) plane relative to the peak intensity of the (004) plane, and a smaller OI value for carbon-based active material 1 may correspond to a structure having a relatively larger number of edge planes 3 compared to basal plane 2. This is because a smaller OI value indicates increased disorder in the crystal arrangement, which increases the number of edge planes 3 through which lithium ions can enter and exit. Therefore, the more the carbon-based active material included in the anode is a low-orientation carbon-based active material with a small crystal orientation index (OI) value, the easier it is for lithium ions to enter and exit through the numerous edge planes 3, thereby resulting in excellent fast-charging characteristics.

However, the hardness of the carbon-based active material increases as the degree of orientation decreases, making it practically difficult to roll low-orientation carbon-based active materials to a high density. As a result, it is difficult to increase the rolling density of anodes containing low-orientation carbon-based active materials, and there are limitations in manufacturing an anode for a lithium secondary battery with high-energy-density.

Accordingly, an anode 100 for a lithium secondary battery according to an embodiment of the present disclosure is a multilayer structure, and includes carbon-based active materials having different orientations in respective layers, such that both fast-charging characteristics and energy density can be excellent. Specifically, the first anode mixture layer 21 includes a first carbon-based active material, the second anode mixture layer 22 includes a second carbon-based active material, and the first carbon-based active material may have a larger OI value than the second carbon-based active material.

In other words, the first anode mixture layer 21, which is the lower layer, can be roll-pressed to a high density by including the first carbon-based active material of high orientation having a relatively large crystal orientation index (OI), thereby enabling the anode 100 to achieve a high-energy-density. Further, the second anode mixture layer 22, which is the upper layer, includes the second carbon-based active material of low orientation having a relatively small crystal orientation index (OI), which facilitates lithium-ion entry and exit from an anode mixture layer adjacent to an electrolyte containing a high concentration of lithium ions, whereby the anode 100 can secure excellent fast-charging performance. Accordingly, the first anode mixture layer 21 may have a larger OI value than the second anode mixture layer 22.

Specifically, the first anode mixture layer 21 may have an OI value of about 9 to about 18. If the OI value of the first anode mixture layer 21 is less than 9, the underlying anode mixture layer may have a low degree of orientation and high hardness, which may make rolling difficult and may hinder improvement of the anode's energy density. If the OI value of the first anode mixture layer 21 is greater than 18, the underlying anode mixture layer is highly oriented, which may hinder lithium-ion intercalation and deintercalation, thereby degrading the anode's fast-charging characteristics.

Specifically, the second anode mixture layer 22 may have an OI value of about 1 to about 8. If the OI value of the second anode mixture layer 22 is less than 1, the upper anode mixture layer may have low orientation and, due to its increased hardness, may be difficult to roll, and it may be difficult to improve the energy density of the anode. If the OI value of the second anode mixture layer 22 is greater than 8, the upper anode mixture layer may be highly oriented, making intercalation and deintercalation of lithium ions difficult, which may result in deterioration of the anode's fast-charging characteristics.

More particularly, the first anode mixture layer 21 may have an OI value of about 15 to about 17, and the second anode mixture layer 22 may have an OI value of about 3 to about 5.

When the orientation index (OI) values of the first anode mixture layer 21 and the second anode mixture layer 22 are each within the above-described ranges, the orientation, hardness, and the like of the carbon-based active material contained in each anode mixture layer of the multilayer anode can be appropriately controlled to different extents, thereby enabling the anode to exhibit excellent fast-charging characteristics and energy density.

The OI value of the first carbon-based active material may range from about 2.1 to about 5, and the OI value of the second carbon-based active material may range from about 1 to about 2.1.

The first carbon-based active material may include artificial graphite and natural graphite, and the second carbon-based active material may include artificial graphite. The OI values of the artificial graphite and natural graphite included in the first carbon-based active material may be greater than or equal to the OI value of the artificial graphite included in the second carbon-based active material. For example, the artificial graphite included in the first carbon-based active material may have an OI value of from about 3 to about 5, the natural graphite included in the first carbon-based active material may have an OI value of from 2.1 to 3, and the artificial graphite included in the second carbon-based active material may have an OI value of from about 1 to about 2.1.

When the orientation index (OI) values of the first carbon-based active material and the second carbon-based active material are each within the above-described ranges, the orientation, hardness, and the like of the carbon-based active materials included in respective anode mixture layers of the multilayer anode can be appropriately adjusted to different ranges, thus enabling both excellent fast-charging characteristics and energy density of the anode.

Meanwhile, the first carbon-based active material may have a Raman R-value according to Formula 2 below that is greater than that of the second carbon-based active material.

$$[Formula\ 2]$$
$$Raman\ R = I_D / I_G$$

In Formula 2, $I_D$ is the peak intensity value in the 1350 to 1380 cm$^{-1}$ absorption region, and $I_G$ is the peak intensity value in the 1580 to 1600 cm$^{-1}$ absorption region.

The Raman R value is a parameter indicating the relative crystallinity of the material, wherein the $I_D$ value indicates the peak intensity of the region associated with the amorphous state, and the $I_G$ value indicates the peak intensity of the region associated with the crystalline state. Thus, a larger Raman R value indicates that the crystallinity of the material is relatively low, whereas a smaller Raman R value indicates that the crystallinity of the material is relatively high. The peak intensity may refer to a maximum peak height within a certain wavenumber range.

For example, the Raman R value of the first carbon-based active material may be from about 0.11 to about 0.50, and the Raman R value of the second carbon-based active material may be from about 0.01 to about 0.10.

The first carbon-based active material may include artificial graphite and natural graphite, and the second carbon-based active material may include artificial graphite. The Raman R value of the artificial graphite and natural graphite included in the first carbon-based active material may be greater than or equal to the Raman R value of the artificial graphite included in the second carbon-based active material. For example, the Raman R value of the artificial graphite included in the first carbon-based active material may be from about 0.10 to about 0.15, the Raman R value of the natural graphite included in the first carbon-based active material may be from about 0.30 to about 0.50, and the Raman R value of the artificial graphite included in the second carbon-based active material may be from about 0.01 to about 0.10.

When the Raman R values of the first and second carbon-based active materials are adjusted within the above-described ranges, the energy density of a multilayer anode can be increased by including in its lower layer a high-density carbon-based active material having relatively high crystallinity and low porosity, and the rapid-charging characteristics of the anode can be improved by including in its upper layer a low-density carbon-based active material having relatively low crystallinity and high porosity to facilitate lithium-ion ingress and egress.

The first carbon-based active material and the second carbon-based active material are not particularly limited as long as each can satisfy the above-described OI value or the like. For example, the first carbon-based active material and the second carbon-based active material may be one or more carbon-based active materials selected from artificial graphite, natural graphite, hard carbon, soft carbon, carbon black, acetylene black, Ketjen black, Super P, graphene, and fibrous carbon.

Specifically, in consideration of the ease of adjusting the orientation of the active material, the first carbon-based active material and the second carbon-based active material may respectively comprise artificial graphite.

More specifically, the first carbon-based active material includes artificial graphite and natural graphite, and the second carbon-based active material may include artificial graphite.

The first carbon-based active material may include natural graphite, thereby reducing cell resistance and improving electrode adhesion.

The weight-based content of artificial graphite in the first carbon-based active material may be greater than or equal to the weight-based content of natural graphite. Specifically, the weight ratio of artificial graphite to natural graphite in the first carbon-based active material may be from 5:5 to 9:1. More specifically, the weight ratio of artificial graphite to natural graphite in the first carbon-based active material may be from 6:4 to 8:2. When the weight ratio of artificial graphite to natural graphite in the first carbon-based active material is within the above range, both the energy density and the fast-charging characteristics of the anode can be improved.

The content of artificial graphite in the first anode mixture layer may be from 50 to 90 wt%, and the content of natural graphite in the first anode mixture layer may be from 10 to 50 wt%. When the contents of artificial graphite and natural graphite in the first anode mixture layer are within the above ranges, cell resistance can be reduced and electrode adhesion can be improved. If the content of natural graphite in the first anode mixture layer exceeds the above range, cell resistance may increase and life may deteriorate. If the content of natural graphite in the first anode mixture layer is less than the above range, the effect of improving electrode adhesion and reducing cell resistance may be insufficient.

The weight ratio of artificial graphite to natural graphite in the first anode mixture layer may be from about 5:5 to about 9:1. Specifically, the weight ratio of artificial graphite to natural graphite in the first anode mixture layer may be from about 6:4 to about 8:2. If the weight ratio of artificial graphite to natural graphite in the first anode mixture layer is within the above-described range, electrode adhesion and resistance characteristics may be improved. If the weight ratio of artificial graphite to natural graphite in the first anode mixture layer exceeds the above-described range, the life characteristics and fast-charging characteristics of the anode may be degraded.

The first carbon-based active material may have a bimodal morphology in which primary particles and secondary particles coexist, and the second carbon-based active material may have a single-particle morphology. Here, the secondary particles refer to particles formed by assembly or aggregation of a plurality of primary particles (for example, more than 10) into a single, substantially unified particle, and the single-particle morphology may be construed to exclude such secondary particles. However, the single-particle morphology does not exclude a substantially monolithic structure in which 2 to 10 primary particles adhere to or are in close contact with one another to form a substantially unitary body (for example, a structure converted into a single particle).

Meanwhile, the lower first anode mixture layer 21 includes the first carbon-based active material in a bimodal form having excellent rolling properties and can thus be densely rolled, whereby the anode 100 can achieve a high-energy-density. Additionally, the upper second anode mixture layer 22 includes the second carbon-based active material in a single-particle form having excellent fast-charging characteristics, so that the anode 100 can achieve excellent fast-charging performance.

Meanwhile, the second carbon-based active material may be surface-coated with at least one selected from the group consisting of hard carbon, soft carbon, heavy oil, and pitch. For example, artificial graphite included in the second carbon-based active material may be surface-coated with at least one selected from the group consisting of soft carbon, heavy oil, and pitch. The second carbon-based active material may be surface-coated with at least one selected from the group consisting of hard carbon, soft carbon, heavy oil, and pitch, thereby improving hardness and providing excellent fast-charging characteristics.

The first carbon-based active material may not be surface-coated. Specifically, artificial graphite included in the first carbon-based active material may not be surface-coated with hard carbon, soft carbon, heavy oil, or pitch, thereby reducing side reactions with the electrolyte and improving high-temperature storage characteristics of the anode. If the first carbon-based active material is surface-coated with at least one material selected from the group consisting of hard carbon, soft carbon, heavy oil, and pitch, it may be difficult to densely roll the anode mixture layer, which may decrease the energy density of the anode.

The content of the first carbon-based active material in the first anode mixture layer 21 may be about 90 to about 98 wt%. Further, the content of the second carbon-based active material in the second anode mixture layer 22 may be about 80 to about 90 wt%.

The content of silicon-based active material in the first anode mixture layer 21 may be about 0.1 to about 6 wt%. Specifically, the content of silicon-based active material in the second anode mixture layer 22 may be about 1 to about 4 wt%. The content of silicon-based active material in the second anode mixture layer 22 may be about 8 to about 20 wt%. Specifically, the content of silicon-based active material in the second anode mixture layer 22 may be about 10 to about 15 wt%.

When the content and ratio of silicon-based active material in the first anode mixture layer 21 and the second anode mixture layer 22 are within the above-described ranges, the first anode mixture layer 21 formed on a surface adjacent to the anode current collector 10 does not include silicon-based active material, thereby mitigating problems such as delamination of the active material layer due to volume expansion and improving the life characteristics of the anode 100. In addition, the second anode mixture layer 22 includes a silicon-based active material having a lower diffusion rate of lithium ions than a carbon-based active material within the above-described range, the anode 100 can achieve high-capacity and fast-charging characteristics.

The respective silicon-based active materials included in the first anode mixture layer 21 and the second anode mixture layer 22 are not particularly limited, and may be suitably selected, depending on the design objectives of the multilayer anode, from silicon oxide-based active materials represented by the formula $SiO_x$ (0<x<2), silicon carbide-based active materials such as Si-C composites represented by the formula SiC, and combinations thereof.

In general, while Si-C composites have higher capacity and lower resistance characteristics compared to conventional silicon oxide-based active materials, structural collapse of the active material during charging and discharging may cause shorting (isolation) between the Si-C composite and carbon-based active materials, resulting in deterioration of the battery's life. Therefore, when a silicon oxide-based active material that undergoes relatively less structural collapse during charging and discharging is applied to the first anode mixture layer 21, problems such as shorting (isolation) between the carbon-based active material and the silicon oxide-based active material in the electrode can be mitigated, unlike when an SiC composite is applied, and at the same time a high-energy-density can be secured by applying an Si-C composite having relatively high capacity and low resistance characteristics to the second anode mixture layer 22. In other words, the first anode mixture layer 21 may include a silicon oxide-based active material as a silicon-based active material, and the second anode mixture layer 22 may include a silicon carbide-based active material as a silicon-based active material.

The first anode mixture layer 21 may further include a first conductive material, and the second anode mixture layer 22 may further include a second conductive material. The first conductive material and the second conductive material provide conductivity to the electrode and are used to maintain the electrode structure, and may be selected to be conductive without causing side reactions with other components of the secondary battery. For example, graphite such as natural graphite or artificial graphite; carbon-based materials such as carbon black, acetylene black, Ketjen black, channel black, furnace black, lamp black, summer black, or carbon fibers; metal powders or metal fibers such as copper, nickel, aluminum, or silver; conductive whiskers such as zinc oxide or potassium titanate; conductive metal oxides such as titanium oxide; or conductive polymers such as polyphenylene derivatives may be used solely or in mixtures of two or more thereof. Specifically, the first conductive material and the second conductive material may each include carbon nanotubes (CNTs). Carbon nanotubes (CNTs) have higher electron mobility than conventional conductive materials such as carbon black, enabling the realization of high-energy-density with a small amount, and, due to their stable structure, have high hardness and can substantially mitigate the volume expansion of silicon-based active materials. Therefore, when the first conductive material and the second conductive material include carbon nanotubes (CNTs), the energy density, life characteristics, and resistance characteristics of the anode 100 may be further improved.

The first conductive material and the second conductive material may be different from each other. Specifically, the anode 100 for a lithium secondary battery may be a multilayer anode in which conductive materials having different properties are applied to respective layers. In this regard, the properties of the first and second conductive materials may be adjusted as follows.

The Raman R-value of the first conductive material may be greater than that of the second conductive material. A detailed description of the Raman R-value is omitted as it would be redundant to the foregoing disclosure.

The Raman R-value of the first conductive material may be about 0.1 to about 1.8, and the Raman R-value of the second conductive material may be about 0.01 to about 0.09. Specifically, the Raman R-value of the first conductive material may be about 0.3 to about 1.0, and the Raman R-value of the second conductive material may be about 0.01 to about 0.05.

The first conductive material may comprise multi-walled carbon nanotubes (MWCNTs), and the second conductive material may comprise single-walled carbon nanotubes (SWCNTs).

When the Raman R-value, types, and the like of the first and second conductive additives are applied as described above, including a conductive additive having relatively low crystallinity in the first anode mixture layer 21, adjacent to the anode current collector 10, can substantially mitigate problems such as electrode delamination caused by volume expansion of the silicon-based active material. Furthermore, by including a conductive additive having high crystallinity and excellent conductivity and dispersibility in the second anode mixture layer 22, which has a relatively low energy density, conductive paths within the electrode layer can be formed and maintained, thereby further improving fast-charging characteristics.

The content of the first conductive material in the first anode mixture layer may be greater than or equal to the content of the second conductive material in the second anode mixture layer. Specifically, the content of the first conductive material in the first anode mixture layer may be from about 0.3 to about 5 wt%, and the content of the second conductive material in the second anode mixture layer may be from about 0.01 to about 0.3 wt%. More specifically, the content of the first conductive material in the first anode mixture layer may be about 0.3 to about 3 wt%, about 0.35 to about 1 wt%, or about 0.4 to about 0.6 wt%, and the content of the second conductive material in the second anode mixture layer may be about 0.05 to about 0.15 wt%.

When the content characteristics of the first conductive material and the second conductive material are adjusted as described above, the conductive material content of the first anode mixture layer 21 formed on a surface adjacent to the anode current collector 10 can be set relatively high, thereby increasing the contact points between the anode current collector 10 and the first anode mixture layer 21. When the number of such contact points increases, the resistance between the anode 100 and the anode current collector 10 can be reduced, and the contact points between the anode current collector 10 and the anode 100 can be maintained even if the anode 100 expands during use. Furthermore, by adjusting the conductive material content of the second anode mixture layer 22 to be relatively low, it is possible not only to reduce the amount of conductive material included in the entire anode 100 to improve cost-effectiveness, but also to increase the amount of active material in the anode mixture layer 20 to realize a anode 100 having the same energy density at a relatively low loading weight. Also, this can mitigate the problem that an excessive amount of conductive material in the upper layer blocks pores and thereby causes deterioration of the interfacial resistance and life characteristics of the anode 100.

The first cathodic mixture layer 21 and the second cathodic mixture layer 22 may each further include a binder.

The binder is not particularly limited so long as it is a compound that serves to adhere the constituents within the anode mixture layer 20 to each other and to adhere the anode mixture layer 20 to the anode current collector 10, and may, for example, be at least one rubber-based binder selected from the group consisting of styrene-butadiene rubber (SBR), fluorinated rubber, ethylene-propylene rubber, butyl acrylate rubber, butadiene rubber, isoprene rubber, acrylonitrile rubber, acrylic rubber, and silane-based rubber; a cellulosic binder such as carboxymethylcellulose (CMC), hydroxypropyl methylcellulose, methylcellulose, or alkali metal salts thereof; a water-soluble polymeric binder such as a polyacrylic acid (PAA) binder, a polyvinyl alcohol (PVA) binder, and a polyvinyl alcohol-polyacrylic acid copolymer (PVA-PAA copolymer) binder; and combinations thereof. Specifically, the binder may include styrene-butadiene rubber (SBR), carboxymethylcellulose (CMC), and combinations thereof.

The binder content in the first anode mixture layer 21 may be equal to or greater than the binder content in the second anode mixture layer 22. Specifically, the ratio of the binder content in the first anode mixture layer 21 to the binder content in the second anode mixture layer 22 may be from about 9:1 to about 5:5. More specifically, the ratio of the binder content in the first anode mixture layer 21 to the binder content in the second anode mixture layer 22 may be from about 8.5:1.5 to about 7:3.

If the binder content is excessively low, the adhesion of the first anode mixture layer 21 adjacent to the anode current collector 10 may be reduced, resulting in problems such as scrap generation during the notching process and delamination of the mixture layer. On the other hand, if the binder content throughout the anode 100 is excessively high, electrical resistance may increase, degrading battery performance. Accordingly, by adjusting the binder content in the lower layer, the first anode mixture layer 21, to be relatively high, the above-mentioned problems can be substantially mitigated while reducing the binder content of the anode as a whole, thereby alleviating an increase in electrical resistance.

The binder content in the first anode mixture layer 21 may be about 2.5 to about 5.0 wt%. In addition, the binder content in the second anode mixture layer 22 may be about 0.1 to about 2.5 wt%. More specifically, the binder content in the first anode mixture layer 21 may be about 3.0 to about 4.0 wt%, and the binder content in the second anode mixture layer 22 may be about 1.0 to about 2.0 wt%.

When the binder content in each anode mixture layer is within the aforementioned range, the multilayer anode 100 can exhibit excellent flexibility and adhesion, thereby substantially mitigating problems such as electrode delamination or cracking during processing or during charge/discharge cycles, and can also ensure low-resistance characteristics.

The loading weight (LW) ratio of the first anode mixture layer 21 to the second anode mixture layer 22 may be from about 2:8 to about 8:2. Further, the loading weight of the first anode mixture layer 21 may be from about 1.5 to about 9.5 mg/cm$^2$, and the loading weight of the second anode mixture layer 22 may be from about 1.5 to about 9.5 mg/cm$^2$.

The loading weight (LW) refers to the amount of the anode mixture layer 20, i.e., a layer comprising an active material, a binder, and a conductive additive, formed on the anode current collector 10, expressed in units of mass per unit area. Here, the area is based on the area of the anode current collector 10, and the mass is based on the mass of the entire anode mixture layer 20 formed.

When a first anode mixture layer 21 and a second anode mixture layer 22 have loading weight (LW) values and ratios within the above-described ranges, a multilayer anode 100 can exhibit excellent capacity, life, and fast-charging characteristics.

The anode current collector 10 may be suitably selected from the group consisting of copper foil, nickel foil, stainless steel foil, titanium foil, nickel foam, copper foam, polymer substrates coated with conductive metal, and combinations thereof.

The method of manufacturing the anode 100 for a lithium secondary battery of the present disclosure is not particularly limited and may be performed by methods such that: (1) a "two-coating" step in which the slurries for the upper and lower layers are applied in sequence, (2) a "simultaneous coating" process in which the slurries for the upper and lower layers are applied simultaneously, and the like. For example, in the "two-coating" process, a first anode slurry comprising a first solvent, a first carbon-based active material, a silicon-based active material, a binder, and a first conductive material is applied to an anode current collector 10 by bar coating, casting, or spraying and dried at about 70 to about 100°C to form a first anode mixture layer 21; then a second anode slurry comprising a second solvent, a second carbon-based active material, a silicon-based active material, a binder, and a second conductive material is applied onto the first anode mixture layer 21 by bar coating, casting, or spraying and dried at about 70 to about 100°C.

The solvent may be, for example, dimethyl sulfoxide (DMSO), isopropyl alcohol, N-methylpyrrolidone (NMP), acetone, or water, and the amount of the solvent used is sufficient, taking into account the coating thickness of the composition for forming the anode mixture layer and the manufacturing yield, to dissolve or disperse the active material, conductive additive, and binder and to provide a viscosity that enables excellent thickness uniformity upon subsequent coating to form the anode mixture layer.

Lithium secondary battery

A lithium secondary battery according to an embodiment of this disclosure may include the anode for a lithium secondary battery described above. For example, the lithium secondary battery may include a cathode, an anode, and a separator interposed between the cathode and the anode. The anode may be a secondary battery anode according to any one of the embodiments described above.

The cathode may include a cathode current collector and a cathode mixture layer disposed on at least one surface of the cathode current collector. The cathode current collector may comprise stainless steel, nickel, aluminum, titanium, or an alloy thereof. The cathode current collector may also be aluminum or stainless steel coated with carbon, nickel, titanium, or silver. The cathode current collector is not limited thereto and may, for example, have a thickness of 10 to 50 $\mu$m.

The cathode mixture layer may comprise a cathode active material. The cathode active material may comprise a compound capable of reversibly intercalating and deintercalating lithium ions.

According to exemplary embodiments, the cathode active material may comprise a lithium-nickel metal oxide. The lithium-nickel metal oxide may further include at least one of cobalt (Co), manganese (Mn), and aluminum (Al).

In some embodiments, the cathode active material or the lithium-nickel metal oxide may comprise a layered structure or a crystalline structure represented by Formula 1.

[Formula 1] $\quad$ $Li_x Ni_a M_b O_{2+z}$

In Formula 1, $0.9 \leq x \leq 1.2$, $0.6 \leq a \leq 0.99$, $0.01 \leq b \leq 0.4$, and $-0.5 \leq z \leq 0.1$. As described above, M may comprise Co, Mn, and/or Al.

The chemical structure represented by Formula 1 indicates the bonding relationships contained within the layered or crystalline structure of the cathode active material and is not intended to exclude additional elements. For example, M includes Co and/or Mn, and Co and/or Mn may be provided, together with Ni, as the main active element of the cathode active material. Formula 1 is provided to express the bonding relationships of the main active elements and should be understood as encompassing the introduction and substitution of additional elements.

In an embodiment, auxiliary elements in addition to the main active element may be further included to enhance the chemical stability of the cathode active material or of the layered/crystalline structure. The auxiliary elements may be co-incorporated into the layered/crystalline structure to form bonds, and such cases are understood to fall within the scope of the chemical structures represented by Formula 1.

The auxiliary element may, for example, comprise at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element, for example, Al, may also act as an auxiliary active element that, together with Co or Mn, contributes to the capacity and output performance of the cathode active material.

For example, the cathode active material or the lithium-nickel metal oxide may comprise a layered structure or a crystalline structure represented by Formula 1-1 below.

$$[\text{Formula 1-1}] \qquad Li_xNi_aM1_{b1}M2_{b2}O_{2+z}$$

In Formula 1, M1 may include Co, Mn, and/or Al. M2 may include the auxiliary elements described above. In Formula 1-1, $0.9 \leq x \leq 1.2$, $0.6 \leq a \leq 0.99$, $0.01 \leq b1 + b2 \leq 0.4$, and $-0.5 \leq z \leq 0.1$.

The cathode active material may further include a coating element or a doping element. For example, elements substantially the same as or similar to the auxiliary elements described above may be used as coating elements or doping elements. For example, any of the elements described above may be used as a coating element or a doping element, either solely or in a combination of two or more elements.

The coating element or the doping element may be present on the surface of the lithium-nickel metal oxide particles, or may penetrate through the surface of the lithium-nickel metal composite oxide particles and be incorporated into the bonding structure represented by Formula 1 or Formula 1-1.

The cathode active material may include a nickel-cobalt-manganese (NCM) lithium oxide. Here, an NCM lithium oxide having an increased nickel content may be used.

Ni may be provided as a transition metal associated with the output and capacity of a lithium secondary battery. Thus, by employing a high-Ni composition in the cathode active material as described above, high-capacity cathode and high-capacity lithium secondary batteries can be provided.

However, as the Ni content increases, the long-term storage stability and life of the cathode or of the secondary battery may be relatively degraded, and side reactions with the electrolyte may increase. According to exemplary embodiments, inclusion of Co can maintain electrical conductivity, while Mn can improve life and capacity retention.

The content of Ni in the NCM-based lithium oxide (e.g., the mole fraction of nickel in the total moles of nickel, cobalt, and manganese) may be at least 0.6, at least 0.7, or at least 0.8. In some embodiments, the Ni content may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP) active material (e.g., $LiFePO_4$).

In some embodiments, the cathode active material may include, for example, an Mn-rich active material having a chemical structure or crystal structure represented by Formula 2; a Li-rich layered oxide (LLO) or over-lithiated oxide (OLO) active material; or a Co-less active material.

$$[\text{Formula 2}] \qquad p[Li_2MnO_3]\cdot(1-p)[Li_qJO_2]$$

In Formula 2, $0 < p < 1$, $0.9 \leq q \leq 1.2$, and J may include at least one element selected from the group consisting of Mn, Ni, Co, Fe, Cr, V, Cu, Zn, Ti, Al, Mg, and B.

A separator may be interposed between the cathode and the anode. The separator may be configured to prevent electrical shorting between the cathode and the anode and to allow ion flow. In accordance with embodiments, the separator may have a thickness of 10 $\mu$m to 20 $\mu$m, but this disclosure is not limited thereto.

For example, the separator may include a porous polymer film or a porous nonwoven fabric. The porous polymer film may include a polyolefin-based polymer, such as an ethylene polymer, a propylene polymer, an ethylene/butene copolymer, an ethylene/hexene copolymer, and an ethylene/methacrylate copolymer. The porous nonwoven fabric may include high-melting-point glass fibers, polyethylene terephthalate fibers, and the like. The separator may also include a ceramic-based material. For example, inorganic particles may be coated on the polymer film or dispersed in the polymer film to improve heat resistance.

The separator may have a single-layer or multi-layer structure comprising the polymeric film and/or the nonwoven fabric described above.

Such lithium secondary batteries have excellent fast-charging performance, high capacity, long life, and low resistance, making them highly suitable as power sources for electric vehicles (EVs).

**Mode for the Invention**

Embodiments and Comparative Examples

1) Carbon-based active material

First artificial graphite, first natural graphite, and second artificial graphite were prepared for use as carbon-based active materials in the embodiments and comparative examples, and were applied differently as the first and second carbon-based active materials in the embodiments and comparative examples. The physical properties of the first artificial graphite, the first natural graphite, and the second artificial graphite are shown in Table 1 below.

Here, the peak intensity values for calculating the crystal orientation index (OI) of the carbon-based active material were measured using Cu K$\alpha$ radiation with an XRD instrument (Empyrean, PANalytical). The measurement conditions were $2\theta = 10°$ to $80°$, a scan speed of $3°$/s, and a step size of $0.025°$ per step.

Furthermore, the Raman R value of the carbon-based active material is calculated from the Raman spectrum measured using a Raman spectrometer (Invia, Renishaw). Here, ID was based on the peak intensity at 1360 cm-1 in the spectrum measured at an excited wavelength of 532 nm using the Raman spectrometer, and IG was based on the peak intensity at 1580 cm-1 in the spectrum measured at an excited wavelength of 532 nm using the Raman spectrometer. In addition, the measurement conditions are set to three scans and a laser exposure time of 30 seconds.

Table 1

| | Peak intensity of (004) plane ($I_{(004)}$) | Peak intensity of (110) plane ($I_{(110)}$) | Crystal orientation index (OI) ($I_{(004)}/I_{(110)}$) | Raman R value ($I_D/I_G$) |
|---|---|---|---|---|
| first artificial graphite | 14091 | 4007 | 3.52 | 0.13 |
| first natural graphite | 5488 | 13446 | 2.45 | 0.34 |
| second artificial graphite | 8707 | 4170 | 2.09 | 0.10 |

2) Preparation of the anode

The first anode slurry including a first carbon-based active material, a silicon-based active material, a binder, and a first conductive additive; and the second anode slurry including a second carbon-based active material, a silicon-based active material, a binder, and a second conductive additive were prepared respectively. Thereafter, the first anode slurry was applied to a copper foil serving as an anode current collector and dried at 80°C to form a first anode mixture layer, and the second anode slurry was applied onto the first anode mixture layer and dried at 80°C to form a second anode mixture layer, thereby preparing anodes for lithium secondary batteries for the embodiments and comparative examples. Here, the loading weight (LW) ratio of the first and second anode mixture layers was 5:5.

Here, carbon-based active materials were differently applied to the first anode mixture layer and the second anode mixture layer according to the embodiments and comparative examples as shown in Table 2, single-walled carbon nanotubes (SWCNTs) and multi-walled carbon nanotubes (MWCNTs) were differently applied as the first conductive additive and the second conductive additive according to the embodiments and comparative examples, a silicon oxide-based active material (SiOx; 0<x<2) was applied as the silicon-based active material, and carboxymethylcellulose (CMC) and styrene-butadiene rubber (SBR) were applied as binders. In addition, the content of the first carbon-based active material in the first anode mixture layer was 93.8 wt%, the content of the second carbon-based active material in the second anode mixture layer was 86 wt%, the contents of the silicon-based active material and the binder in the first anode mixture layer were 2 wt% and 3.7 wt%, respectively, and the contents of the silicon-based active material and the binder in the second anode mixture layer were 12 wt% and 1.9 wt%, respectively. Meanwhile, an artificial graphite surface-coated with hard carbon was used as a surface-coated carbon-based active material.

The crystal orientation indices (OI) of the first electrode mixture layer and the second electrode mixture layer applied to the anode mixture layers in the embodiments and comparative examples, the Raman R values of the first conductive material and the second conductive material, and the contents of the first and second conductive materials are shown in Table 3 below.

Furthermore, the Raman R value of the conductive material was calculated from the Raman spectrum measured using a Raman spectrometer (Invia, Renishaw). Here, $I_D$ was based on the peak intensity at 1360 cm$^{-1}$ in the spectrum measured at an excited wavelength of 532 nm using the Raman spectrometer, and $I_G$ was based on the peak intensity at 1580 cm$^{-1}$ in the spectrum measured at an excited wavelength of 532 nm using the Raman spectrometer. In addition, the number of scans was three and the laser exposure time was 30 seconds as the measurement conditions.

Table 2

| | First Anode Mixture layer | First Anode Mixture layer | First Anode Mixture layer | First Anode Mixture layer | Second Anode Mixture layer | Second Anode Mixture layer | Second Anode Mixture layer |
|---|---|---|---|---|---|---|---|
| | Artificial Graphite | Natural Graphite | Weight Ratio of Artificial Graphite and Natural Graphite | Artificial Graphite Surface Coating Presence | Artificial Graphite | Natural Graphite | Artificial Graphite Surface Coating Presence |
| Embodiment 1 | O (First Artificial Graphite) | O (First Natural Graphite) | 7:3 | X | O (Second Artificial Graphite) | X | O |
| Embodiment 2 | O (First Artificial Graphite) | O (First Natural Graphite) | 7:3 | X | O (First Artificial Graphite) | X | O |
| Embodiment 3 | O (Second Artificial Graphite) | O (First Natural Graphite) | 7:3 | X | O (Second Artificial Graphite) | X | O |
| Embodiment 4 | O (First Artificial Graphite) | O (First Natural Graphite) | 7:3 | X | O (Second Artificial Graphite) | X | O |
| Embodiment 5 | O(First Artificial Graphite) | O (First Natural Graphite) | 3:7 | X | O (Second Artificial Graphite) | X | O |
| Embodiment 6 | O (First Artificial Graphite) | O (First Natural Graphite) | 9:1 | X | O (Second Artificial Graphite) | X | O |
| Embodiment 7 | O (First Artificial Graphite) | O (First Natural Graphite) | 7:3 | O | O (Second Artificial Graphite) | X | O |
| Comparative Example 1 | O (Second Artificial Graphite) | O (First Natural Graphite) | 7:3 | X | O (First Artificial Graphite) | X | O |

Table 3

| | First node Mixture layer (Lower Layer) | First Anode Mixture layer (Lower Layer) | First Anode Mixture layer (Lower Layer) | Second Anode Mixture layer (Upper Layer) | Second Anode Mixture layer (Upper Layer) | Second Anode Mixture layer (Upper Layer) |
|---|---|---|---|---|---|---|
| | First Electrode Mixture layer Crystal | First Conductive Material | First Conductive Material | Second Electrode Mixture layer Crystal | Second Conductive Material | Second Conductive Material |
| | Orientation Index (OI) $(I_{(004)}/I_{(11\,0)})$ | | | Orientation Index (OI) $(I_{(004)}/I_{(11\,0)})$ | | |
| | First Electrode Mixture layer Crystal Orientation Index (OI) $(I_{(004)}/I_{(11\,0)})$ | Raman R value $(I_D/I_G)$ | Content (wt%) | Second Electrode Mixture layer Crystal Orientation Index (OI) $(I_{(004)}/I_{(11\,0)})$ | Raman R value $(I_D/I_G)$ | Content (wt%) |
| Embodiment 1 | 16.00 | 0.35 | 0.5 | 4.24 | 0.02 | 0.1 |
| Embodiment 2 | 16.00 | 0.35 | 0.5 | 13.6 | 0.02 | 0.1 |
| Embodiment 3 | 4.55 | 0.35 | 0.5 | 4.24 | 0.02 | 0.1 |
| Embodiment 4 | 16.00 | 0.35 | 0.5 | 4.55 | 0.35 | 0.1 |
| Embodiment 5 | 8.34 | 0.35 | 0.5 | 4.24 | 0.02 | 0.1 |
| Embodiment 6 | 23.00 | 0.35 | 0.5 | 4.24 | 0.02 | 0.1 |
| Embodiment 7 | 12.00 | 0.35 | 0.5 | 0.56 | 0.02 | 0.1 |
| Comparative Example 1 | 4.55 | 0.35 | 0.5 | 13.6 | 0.02 | 0.1 |

3) Manufacturing of secondary batteries

A cathode was prepared by applying and drying a slurry containing a lithium transition-metal composite oxide, Li $[Ni_{0.8}Co_{0.1}Mn_{0.1}]O_2$, on an aluminum foil, prepared secondary battery cell was placed in a battery pouch by interposing a polyolefin separator between the cathode and the anode prepared above, and an electrolyte solution in which 1 M $LiPF_6$ was dissolved in a solvent mixture of ethylene carbonate (EC) and diethyl carbonate (DEC) was injected into the battery pouch and the pouch was sealed to manufacture a pouch-type lithium secondary battery. The manufactured pouch-type lithium secondary batteries were used as secondary battery samples in the Examples and Comparative Examples.

4) Evaluation of energy density

For the manufactured secondary cell samples, a pouch-type secondary battery having a large capacity of 20 Ah or more was prepared using the same anode and cathode for all cells, and were charged in constant-current mode at 0.3C until the voltage reached 4.2 V, followed by constant-voltage charging at 4.2 V with a cut-off at 0.05C; the cells were then discharged in constant-current mode at 0.3C until the voltage reached 2.5 V, whereupon the discharge capacity (Ah) and energy (Wh) were measured, and the volume of each cell in the 4.2 V charged state was measured to calculate the volume-energy density, the results of which are shown in Table 4.

5) Evaluation of resistance characteristics

The resistance characteristics of the secondary battery samples were measured by discharging them at a current of 1 C for 10 seconds after a one-hour rest period at 25°C, following adjustment to a state of charge (SOC) of 50%, and the results are shown in Table 2. Specifically, the resistance value of the secondary battery sample was measured according to Formula 2, and the results are shown in Table 4.

$$[Formula\ 3]$$
$$R = (V_0 - V_1)\ /\ I$$

In Formula 3, R is the resistance of the secondary battery; $V_0$ is the voltage of the secondary battery measured after setting the state of charge (SOC) to 50% at 25°C and allowing a one-hour rest period; $V_1$ is the voltage of the secondary battery measured after discharging at a 1C rate for 10 seconds; and I is the 1C current.

6) Evaluation of fast-charging life characteristics

After subjecting the secondary battery samples to charging for 17 minutes within an SOC range of 8% to 80% and to discharging at 0.3C at 25°C for 300 cycles, the discharge capacity retention as a percentage of the initial discharge capacity was measured, and the results are shown in Table 4.

Table 4

|  | Energy Density (Wh/L) | Resistance Characteristics (mΩ) | Fast-Charging Life Characteristics (%) |
|---|---|---|---|
| Embodiment 1 | 700 | 0.90 | 92.7 |
| Embodiment 2 | 705 | 0.94 | 81.5 |
| Embodiment 3 | 689 | 0.91 | 93.0 |
| Embodiment 4 | 701 | 0.97 | 74.3 |
| Embodiment 5 | 693 | 0.93 | 93.3 |
| Embodiment 6 | 702 | 0.98 | 72.9 |
| Embodiment 7 | 691 | 0.95 | 80.5 |
| Comparative Example 1 | 688 | 0.99 | 70.3 |

Referring to Tables 1 to 4, Comparative Example 1, which includes a carbon-based active material having relatively low orientation in the first anode mixture layer (lower layer) and a carbon-based active material having relatively high orientation in the second anode mixture layer (upper layer), exhibits relatively inferior energy density, resistance characteristics, and fast-charge life characteristics compared to Examples 1 to 7. This is believed to be because increased porosity in the first anode mixture layer (lower layer) containing the carbon-based active material having relatively low orientation prevents proper formation of conductive paths, and the second anode mixture layer (upper layer), which is subjected to excessive pressure during electrode rolling to achieve the energy density, contains the carbon-based active material having relatively high orientation, thereby impeding lithium-ion insertion and extraction.

On the other hand, in Example 2, in which the OI value of the second anode mixture layer on the upper side in contact with the electrolyte is greater than 8, indicating relatively high orientation, lithium-ion entry and exit from the upper layer are relatively difficult, and thus the resistance characteristics and fast-charging characteristics are relatively inferior to those of Example 1. In Example 3, both the upper and lower anode mixture layers have OI values below 9, corresponding to relatively low orientation, and the energy density is relatively inferior to that of Example 1. In addition, Example 4, which includes a conductive additive having a relatively high Raman R value in the second anode mixture layer (upper layer), exhibits a relatively higher OI value of the upper anode mixture layer compared to Example 1 and relatively inferior fast-charging characteristics compared to Example 1.

Furthermore, in Example 5, in which the lower first anode mixture layer has an OI value of less than 9 and is relatively low in orientation, the energy density is inferior to that of Example 1. In Example 6, in which the lower first anode mixture layer has an OI value greater than 18 and is excessively high in orientation, the fast-charging performance is inferior to that of Example 1. Meanwhile, in Example 7, in which the upper second anode mixture layer has an OI value of less than 1 and is relatively low in orientation, the energy density is inferior to that of Example 1.

In view of these results, it is believed that when the lower first anode mixture layer appropriately includes a highly oriented carbon-based active material and a conductive additive having excellent dispersibility, as in Example 1, and the upper second anode mixture layer appropriately includes a low-oriented carbon-based active material and a highly conductive additive, a anode for a lithium secondary battery and a lithium secondary battery comprising the same can exhibit overall excellent energy density, resistance characteristics, and fast-charging characteristics.

While example embodiments have been shown and described above, it will be apparent to those skilled in the art that modifications and variations could be made without departing from the scope of the present disclosure as defined by the appended claims. Accordingly, the true technical scope of this disclosure should be determined by the technical scope of the appended claims.

The present disclosure may also relate to the following aspects.

Aspect 1) An anode for a lithium secondary battery comprising: an anode current collector; a first anode mixture layer formed on at least one surface of the anode current collector and comprising a first carbon-based active material comprising artificial graphite and natural graphite; and a second anode mixture layer formed on the first anode mixture layer and comprising a second carbon-based active material comprising artificial graphite; wherein the first anode mixture layer and the second anode mixture layer respectively comprise a silicon-based active material, and wherein the first anode mixture layer has an OI value according to Formula 1 that is greater than that of the second anode mixture layer.

$$[\text{Formula } 1]$$
$$OI = I_{004} / I_{110}$$

(In Formula 1, OI is a crystal orientation index according to an XRD measurement, $I_{004}$ is the peak intensity of the (004) plane when the XRD measurement is performed for an anode mixture layer, and $I_{110}$ is the peak intensity of the (110) plane when the XRD measurement is performed for the mixture layer.)

Aspect 2) In aspect 1, the first anode mixture layer may have an OI value of 9 to 18.

Aspect 3) In aspect 1 or 2, the second anode mixture layer may have an OI value of 1 to 8.

Aspect 4) In any one of aspects 1 to 3, the first carbon-based active material may have a Raman R value greater than that of the second carbon-based active material according to the following Formula 2.

$$[\text{Formula } 2]$$
$$\text{Raman } R = I_D / I_G$$

(In Formula 2, $I_D$ is a peak intensity value in the 1350 to 1380 cm$^{-1}$ absorption region, and $I_G$ is a peak intensity value in the 1580 to 1600 cm$^{-1}$ absorption region.)

Aspect 5) In aspect 4, the first carbon-based active material may have a Raman R value of 0.11 to 0.50.

Aspect 6) In aspect 4 or 5, the second carbon-based active material may have a Raman R value of 0.01 to 0.10.

Aspect 7) In any one of aspects 1 to 6, the content of artificial graphite in the first anode mixture layer may be 50 wt% to 90 wt%.

Aspect 8) In any one of aspects 1 to 7, the first carbon-based active material may have a bimodal morphology, and the second carbon-based active material may have a single-particle morphology.

Aspect 9) In any one of aspects 1 to 8, the first carbon-based active material may not be surface-coated.

Aspect 10) In any one of aspects 1 to 9, the second carbon-based active material may be surface-coated with at least one selected from the group consisting of hard carbon, soft carbon, heavy oil, and pitch.

Aspect 11) In any one of aspects 1 to 10, the first anode mixture layer may further comprise a first conductive material, and the second anode mixture layer may further comprise a second conductive material, and the first conductive material and the second conductive material may different from each other.

Aspect 12) In aspect 11, the first conductive material may have a Raman R value greater than that of the second conductive material according to the following Formula 2.

$$[\text{Formula } 2]$$
$$\text{Raman } R = I_D / I_G$$

(In Formula 2 $I_D$ is a peak intensity value in the 1350 to 1380 cm$^{-1}$ absorption region, and $I_G$ is a peak intensity value in the 1580 to 1600 cm$^{-1}$ absorption region.)

Aspect 13) In aspect 12, the first conductive material may have a Raman R value of 0.1 to 1.8.

Aspect 14) In aspect 12 or 13, the second conductive material may have a Raman R value of 0.01 to 0.09.

Aspect 15) A lithium secondary battery may comprise an anode for the lithium secondary battery according to any one of aspects 1 to 14.

[Description of Reference Numerals]

| | | | |
|---|---|---|---|
| 1: | Carbon-based active material | 2: | Basal plane |
| 3: | Edge plane | 10: | Anode current collector |
| 20: | Anode mixture layer | 21: | First anode mixture layer |
| 22: | Second anode mixture layer | 100: | Anode for lithium secondary batteries |

**Industrial Applicability**

As described above, the features of this disclosure may be applied, in whole or in part, to an anode for a lithium secondary battery and to a lithium secondary battery comprising the same.

**Claims**

1. An anode for a lithium secondary battery comprising:

   an anode current collector;
   a first anode mixture layer formed on at least one surface of the anode current collector and comprising a first carbon-based active material comprising artificial graphite and natural graphite; and
   a second anode mixture layer formed on the first anode mixture layer and comprising a second carbon-based active material comprising artificial graphite;
   wherein the first anode mixture layer and the second anode mixture layer respectively comprise a silicon-based active material, and
   wherein the first anode mixture layer has an OI value according to Formula 1 that is greater than that of the second anode mixture layer.

$$[Formula\ 1]$$
$$OI = I_{004} / I_{110}$$

   (In Formula 1, OI is a crystal orientation index according to an XRD measurement, $I_{004}$ is the peak intensity of the (004) plane when the XRD measurement is performed for an anode mixture layer, and $I_{110}$ is the peak intensity of the (110) plane when the XRD measurement is performed for the mixture layer.)

2. The anode for a lithium secondary battery of claim 1, wherein the first anode mixture layer has an OI value of 9 to 18.

3. The anode for a lithium secondary battery of claim 1, wherein the second anode mixture layer has an OI value of 1 to 8.

4. The anode for a lithium secondary battery of claim 1, wherein the first carbon-based active material comprises, according to the following Formula 2, a Raman R value greater than that of the second carbon-based active material.

$$[Formula\ 2]$$
$$Raman\ R = I_D / I_G$$

   (In Formula 2, $I_D$ is a peak intensity value in the 1350 to 1380 cm$^{-1}$ absorption region, and $I_G$ is a peak intensity value in the 1580 to 1600 cm$^{-1}$ absorption region.)

5. The anode for a lithium secondary battery of claim 4, wherein the first carbon-based active material has a Raman R value of 0.11 to 0.50.

6. The anode for a lithium secondary battery of claim 4, wherein the second carbon-based active material has a Raman R value of 0.01 to 0.10.

7. The anode for a lithium secondary battery of claim 1, wherein the content of artificial graphite in the first anode mixture layer is 50 to 90 wt%, and

wherein the content of natural graphite in the first anode mixture layer is 10 to 50 wt%.

8. The anode for a lithium secondary battery of claim 1, wherein the first carbon-based active material has a bimodal morphology, and
wherein the second carbon-based active material has a single-particle morphology.

9. The anode for a lithium secondary battery of claim 1, wherein the first carbon-based active material is not surface-coated.

10. The anode for a lithium secondary battery of claim 1, wherein the second carbon-based active material is surface-coated with at least one selected from the group consisting of hard carbon, soft carbon, heavy oil, and pitch.

11. The anode for a lithium secondary battery of claim 1, wherein the first anode mixture layer further comprises a first conductive material,

wherein the second anode mixture layer further comprises a second conductive material, and
wherein the first conductive material and the second conductive material are different from each other.

12. The anode for a lithium secondary battery of claim 11, wherein the first conductive material has a Raman R value greater than that of the second conductive material according to the following Formula 2.

$$[Formula\ 2]$$
$$Raman\ R = I_D\ /\ I_G$$

(In Formula 2, $I_D$ is a peak intensity value in the 1350 to 1380 cm$^{-1}$ absorption region, and $I_G$ is a peak intensity value in the 1580 to 1600 cm$^{-1}$ absorption region.)

13. The anode for a lithium secondary battery of claim 12, wherein the first conductive material has a Raman R value of 0.1 to 1.8.

14. The anode for a lithium secondary battery of claim 12, wherein the second conductive material has a Raman R value of 0.01 to 0.09.

15. A lithium secondary battery comprising an anode for a lithium secondary battery according to any one of claims 1 to 14.

[FIG. 1]

[FIG. 2]

100

## INTERNATIONAL SEARCH REPORT

| International application No. |
|---|
| **PCT/KR2024/016368** |

| A. | CLASSIFICATION OF SUBJECT MATTER |
|---|---|

**H01M 4/134**(2010.01)i; **H01M 4/131**(2010.01)i; **H01M 4/133**(2010.01)i; **H01M 4/36**(2006.01)i; **H01M 4/48**(2010.01)i; **H01M 4/583**(2010.01)i; **H01M 4/62**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/134(2010.01); H01M 10/052(2010.01); H01M 10/0525(2010.01); H01M 10/0569(2010.01); H01M 4/131(2010.01); H01M 4/133(2010.01); H01M 4/583(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지 (lithium secondary battery), 음극 (anode), 결정 배향성 지수 (orientation index), 이중층 (double-layer structure), 인조흑연 (artificial graphite), 천연흑연 (natural graphite)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2544496 B1 (LG ENERGY SOLUTION, LTD.) 20 June 2023 (2023-06-20)<br>See abstract; paragraphs [0023]-[0025], [0081], [0103], [0108], [0115]-[0119], [0192] and [0200]-[0207]; and table 1. | 1,4-7,15 |
| Y | | 2,3,8-14 |
| Y | KR 10-2020-0073801 A (LG CHEM, LTD.) 24 June 2020 (2020-06-24)<br>See abstract; paragraphs [0082] and [0111]-[0119]; and claim 1. | 2,3,8-10 |
| Y | KR 10-2022-0133624 A (SK ON CO., LTD.) 05 October 2022 (2022-10-05)<br>See abstract; paragraphs [0016], [0017], [0020], [0021] and [0031]-[0033]; and figure 1. | 11-14 |
| A | KR 10-2020-0124513 A (SAMSUNG SDI CO., LTD.) 03 November 2020 (2020-11-03)<br>See abstract; claims 1-14; and figure 2. | 1-15 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 January 2025** | **24 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/016368** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2023-0216089 A1 (CONTEMPORARY AMPEREX TECHNOLOGY CO., LIMITED) 06 July 2023 (2023-07-06)<br>See abstract; and claims 1-20. | 1-15 |

Form PCT/ISA/210 (second sheet) (July 2022)

## INTERNATIONAL SEARCH REPORT
### Information on patent family members

International application No.

**PCT/KR2024/016368**

| Patent document cited in search report | | | Publication date (day/month/year) | Patent family member(s) | | | Publication date (day/month/year) |
|---|---|---|---|---|---|---|---|
| KR | 10-2544496 | B1 | 20 June 2023 | CN | 118541828 | A | 23 August 2024 |
| | | | | EP | 4447164 | A1 | 16 October 2024 |
| | | | | WO | 2024-136079 | A1 | 27 June 2024 |
| KR | 10-2020-0073801 | A | 24 June 2020 | KR | 10-2743211 | B1 | 17 December 2024 |
| KR | 10-2022-0133624 | A | 05 October 2022 | CN | 115132969 | A | 30 September 2022 |
| | | | | CN | 115132969 | B | 12 December 2023 |
| | | | | CN | 117334839 | A | 02 January 2024 |
| | | | | EP | 4064383 | A1 | 28 September 2022 |
| | | | | EP | 4064383 | B1 | 05 July 2023 |
| | | | | EP | 4220752 | A2 | 02 August 2023 |
| | | | | EP | 4220752 | A3 | 09 August 2023 |
| | | | | KR | 10-2023-0127948 | A | 01 September 2023 |
| | | | | KR | 10-2570427 | B1 | 24 August 2023 |
| | | | | US | 2022-0310991 | A1 | 29 September 2022 |
| | | | | US | 2024-0405208 | A1 | 05 December 2024 |
| KR | 10-2020-0124513 | A | 03 November 2020 | CN | 113728461 | A | 30 November 2021 |
| | | | | CN | 113728461 | B | 30 July 2024 |
| | | | | EP | 3961758 | A1 | 02 March 2022 |
| | | | | EP | 3961758 | B1 | 21 August 2024 |
| | | | | JP | 2022-530082 | A | 27 June 2022 |
| | | | | JP | 7246521 | B2 | 27 March 2023 |
| | | | | KR | 10-2570570 | B1 | 23 August 2023 |
| | | | | US | 2022-0209217 | A1 | 30 June 2022 |
| | | | | US | 2024-0363861 | A1 | 31 October 2024 |
| | | | | WO | 2020-218773 | A1 | 29 October 2020 |
| US | 2023-0216089 | A1 | 06 July 2023 | CN | 116670844 | A | 29 August 2023 |
| | | | | CN | 116670844 | B | 09 August 2024 |
| | | | | CN | 118572195 | A | 30 August 2024 |
| | | | | EP | 4184650 | A1 | 24 May 2023 |
| | | | | EP | 4184650 | A4 | 25 September 2024 |
| | | | | WO | 2023-050414 | A1 | 06 April 2023 |

Form PCT/ISA/210 (patent family annex) (July 2022)